# FASCICULE DE BREVET EUROPEEN

(11) **EP 1 502 830 B1**
(45) Date de publication et mention de la délivrance du brevet: **29.03.2006**
(21) Numéro de dépôt: 04291717.9
(22) Date de dépôt: 07.07.2004
(51) Int. Cl.: B60R 25/10, G10K 9/22

(54) **Sirène blindée pour véhicule automobile**
Gepanzerte Sirene für Kraftfahrzeug
Armoured siren for motor vehicle

(30) Priorité: 31.07.2003 FR 0309419
(43) Date de publication de la demande: 02.02.2005
(73) Titulaire: Delphi Technologies, Inc., Troy, MI 48007 (US)
(72) Inventeur: Jawdoszyn, Claude, 95110 Sannois (FR)
(74) Mandataire: Abello, Michel

(56) Documents cités:
- DE-A- 10 016 418
- DE-A- 10 124 551
- FR-A- 2 687 967
- US-A- 5 606 304

## Description

La présente invention est relative à une sirène pouvant équiper des véhicules automobiles comme des voitures, des camions ou l'équivalent, et émettant un son puissant lorsque ledit véhicule est l'objet d'une effraction. Plus particulièrement, l'invention concerne une sirène blindée comportant une enveloppe extérieure en tôle afin de protéger les éléments internes de la sirène produisant le signal sonore contre des tentatives de destruction.

Des sirènes d'antivol sont connues. Par exemple, le document FR-A-2 687 967 décrit une sirène comportant une demi-coquille antérieure s'adaptant sur une demi-coquille postérieure de manière à former une cavité intérieure. Les deux demi-coquilles sont de préférence en matière plastique. Ladite cavité reçoit des batteries, une plaquette de circuit électronique de commande, une unité électromécanique, une membrane et une calotte interne. La demi-coquille antérieure a la forme d'un dôme saillant vers l'extérieur de la sirène de manière à ce que le profil intérieur de la demi-coquille antérieure et le profil extérieur de la calotte interne, situées en vis-à-vis l'une de l'autre, forment un canal "cardioïde" permettant la formation d'un son à partir de la vibration de la membrane.

Il est ensuite connu de blinder une telle sirène d'antivol en la plaçant dans un boîtier de forme sensiblement cubique fermé par un couvercle. Le boîtier et le couvercle sont, par exemple, en tôle découpée et repliée, de 2 mm d'épaisseur. Le couvercle est maintenu sur le boîtier par des vis et des écrous. Le boîtier comporte des languettes en tôle faisant saillie vers l'extérieur dans le but de fixer l'ensemble de la sirène blindée sur la caisse du véhicule. Le couvercle plat comporte une pluralité de trous circulaires pour que le signal sonore produit par la sirène sorte vers l'extérieur du blindage.

L'inconvénient majeur de blinder ainsi une sirène d' antivol est une perte importante de l'efficacité sonore de ladite sirène. En effet celle-ci se trouve enfermée dans une enceinte en tôle et le son est étouffé. De plus, la demi-coquille antérieure formant la sirène possède une forme complexe comportant une couronne périphérique ouverte, pourvue de nervures soutenant un dôme au dessus d'orifices d'échappements. De plus, les différents éléments participant à la production du son se trouvent entourés par une double enveloppe : une première enveloppe en plastique formée par les deux demi-coquilles pour générer le son, entourée elle-même par une deuxième enveloppe en métal formée par le boîtier et le couvercle pour blinder la sirène. Ce manque d'intégration dans l'architecture de la sirène et de son blindage se traduit par un nombre élevé de pièces et des coûts importants en matière première et en fabrication. Enfin, le volume de la sirène et de son blindage reste important.

La but de la présente invention est de proposer une sirène blindée ne présentant pas les désavantages cités ci-dessus.

Pour cela l'invention a pour objet une sirène blindée destinée à équiper un véhicule automobile, comportant un boîtier intérieur, des moyens électroniques de génération d'un signal électrique logés dans ledit boîtier intérieur, un ensemble de production du son connecté électriquement auxdits moyens électroniques et apte à transformer ledit signal électrique en un signal sonore, et une coque extérieure de blindage destinée à recevoir ledit boîtier intérieur et comportant des première et deuxième demi-coques associées par des moyens d'assemblage, une paroi dite principale de ladite deuxième demi-coque étant munie d'au moins une ouverture de libération du son, caractérisée en ce que ledit ensemble de production du son forme le couvercle dudit boîtier intérieur, des moyens de fermeture sont prévus pour fermer de manière étanche ledit ensemble de production du son sur ledit boîtier intérieur, et en ce que la face intérieure de ladite paroi principale forme, avec la surface extérieure de l'ensemble de production du son placée en vis-à-vis, une chambre de compression pour produire un son.

Avantageusement, la deuxième demi-coque participe à la fois à la génération du son, en formant avec l'ensemble de production du son la chambre de compression, et au blindage autour de la sirène ainsi obtenue. Le nombre de pièces est réduit. La coque extérieure de blindage n'étouffe pas le signal sonore puisque la deuxième demi-coque participe à sa production. Le volume de la sirène blindée est réduit. La sirène blindée présente un encombrement moindre

De préférence, la paroi principale comporte une pluralité d'ouvertures de libération du son constituées par des fentes ménagées à travers la paroi principale, radialement depuis son centre.

Avantageusement, les ouvertures de libération du son sont réalisées de manière simple par découpe de fentes dans la paroi principale en tôlede la deuxième demi-coque. Des ouvertures en forme de fente favorisent la libération du son. De plus, cette forme particulière des ouvertures de libération du son participe à la fonction de protection remplie par la deuxième demi-coque, en empêchant l'introduction d'un outil à l'intérieur du blindage dans le but de détruire les composants fragiles produisant le son.

De préférence, la paroi principale de la deuxième demi-coque comporte un dôme central faisant saillie vers l'extérieur placé en vis-à-vis de l'ensemble de production du son de manière à former une chambre de compression s'adaptant au profil de l'ensemble de production du son.

Avantageusement, la surface intérieure de la deuxième demi-coque possède un profil adapté à la surface extérieure de l'ensemble de production du son, de manière à former une chambre de compression efficace. Un profil en forme de dôme est facilement réalisable par emboutissage. De plus, un tel profil s'adapte à la forme extérieure de l'ensemble de production du son pour réduire encore le volume total de la sirène.

De préférence, une paroi du boîtier intérieur est munie d'un connecteur traversant la paroi et relié électriquement aux moyens électroniques, et en ce que la première demi-coque comporte une découpe adaptée par laquelle le connecteur est accessible depuis l'extérieur, de manière à ce que les moyens électroniques puissent échanger des signaux électriques avec des moyens électroniques extérieurs.

De préférence, la première demi-coque comporte un fond et des premières parois latérales, et la deuxième demi-coque comporte la paroi principale et des deuxièmes parois latérales, et en ce que les deuxièmes parois latérales recouvrent au moins partiellement les premières parois latérales en position assemblée de la deuxième demi-coque sur la première demi-coque.

De préférence, la périphérie de la surface intérieure de la paroi principale de la deuxième demi-coque comporte un épaulement sur lequel les extrémités libres des premières parois latérales de la première demi-coque viennent prendre appui.

Avantageusement, la position relative des deux demi-coques est déterminée par mise en butée des extrémités libres des premières parois latérales de la première demi-coque sur un épaulement ménagé sur la surface intérieure de la deuxième demi-coque.

De préférence, les moyens d'assemblage des première et deuxième demi-coques comportent une pluralité d'orifices placés sur les premières parois latérales et une pluralité d'ergots rétractables placés sur les deuxièmes parois latérales faisant saillie vers l'intérieur, les ergots se rétractant lorsque la deuxième demi-coque est placée sur la première demi-coque et reprenant leur position initiale une fois que les deux demi-coques sont en position assemblée, les ergots de la deuxième demi-coque étant en vis-à-vis des orifices de la première demi-coque.

De préférence, les ergots sont découpés dans les deuxièmes parois latérales et forment des bras coudés d'un seul tenant avec la deuxième demi-coque, de manière à permettre un assemblage définitif des première et deuxième demi-coques entre elles.

Les moyens permettant de fixer les deux demi-coques entre elles prennent avantageusement la forme d'ergots coopérant avec des orifices placés en vis-à-vis. Une fois assemblées l'une sur l'autre, les deux demi-coques ne sont plus amovibles. De plus, les ergots sont placés sur la deuxième demi-coque, dans la configuration où les deuxièmes parois latérales recouvrent les premières parois latérales, de sorte que les ergots ne sont pas accessibles depuis l'extérieur, empêchant l'ouverture de la coque extérieure servant de blindage. Tout ceci a pour but d'augmenter la fonction de protection de la sirène par la coque extérieure.

De préférence, les parois latérales de la deuxième demi-coque comportent des portions bombées faisant saillie vers l'extérieur et munies d'alésages traversant, pour former avec les premières parois latérales en vis-à-vis un logement destiné à recevoir la tête d'une vis dont la tige traverse l'alésage traversant dans le but de fixer la sirène sur la caisse du véhicule.

Les deux demi-coques étant avantageusement en tôle embouties, il est facile de réaliser une portion bombées faisant saillie par repoussement de la matière de la deuxième demi-coque. De cette manière, en position assemblée des deux demi-coques, un logement est formé qui est susceptible de recevoir la tête d'une vis, mais qui est trop étroit pour permettre de sortir celle-ci.

De préférence, les moyens de fermeture comportent un épaulement formé en creux sur la face intérieure de l'extrémité libre des parois latérales du boîtier intérieur et une collerette en saillie sur le bord périphérique de l'ensemble de production du son, apte à prendre appui et à s'encliqueter sur l'épaulement.

Les moyens de fermeture comportent un épaulement situé sur la surface intérieure de l'extrémité libre des parois latérales du boîtier intérieur, une gorge située sur la partie amincie de l'épaulement, et une collerette en saillie sur le bord périphérique de l'ensemble de production du son. La collerette est apte à prendre appui sur l'épaulement et à s'encliqueter dans la gorge.

De préférence, l'ensemble de production du son comporte un support, un diaphragme piézoélectrique placé sur la face intérieure du support et connecté aux moyens électroniques, apte à vibrer en réponse au signal électrique émis par les moyens électroniques, et un conduit profilé traversant la paroi du support, débouchant dans la chambre de compression et coopérant avec le diaphragme pour la production du son.

De préférence, les moyens électroniques comportent une carte de circuit imprimé équipée apte à générer le signal électrique en direction de l'ensemble de production du son et des batterie aptes à fournir une puissance électrique à la carte pour que la sirène soit autonome.

De préférence le boîtier intérieur comporte des moyens de support de la carte électronique constitués par des languettes élastiques possédant des becs tournés vers la carte électronique et des moyens de guidage aptes à coopérer avec des alésages situés sur la carte pour positionner cette dernière.

De préférence encore, la sirène comporte des moyens de fixation du boîtier intérieur à la première demi-coque, les moyens de fixation comportant une pluralité de saillies situées sur les paroi latérales du boîtier intérieur et dirigées vers l'extérieur dudit boîtier intérieur, et des ouvertures destinées à coopérer avec les saillies et formées sur des parois latérales de la première demi-coque, de manière à ce que les ouvertures et les saillies soient respectivement en vis-à-vis les unes des autres en position assemblée du boîtier intérieur à l'intérieur de la première demi-coque.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1 est une vue de côté de la sirène blindée selon le mode de réalisation préféré de l'invention ;
- la figure 2 est une coupe selon le plan de la figure 1 de la sirène blindée ;
- la figure 3 est une vue de dessous de la sirène blindée de la figure 1; et,
- la figure 4 est une vue de dessus de la sirène blindée de la figure 1, où le plan de coupe 2-2 de la figure 2 a été représenté.

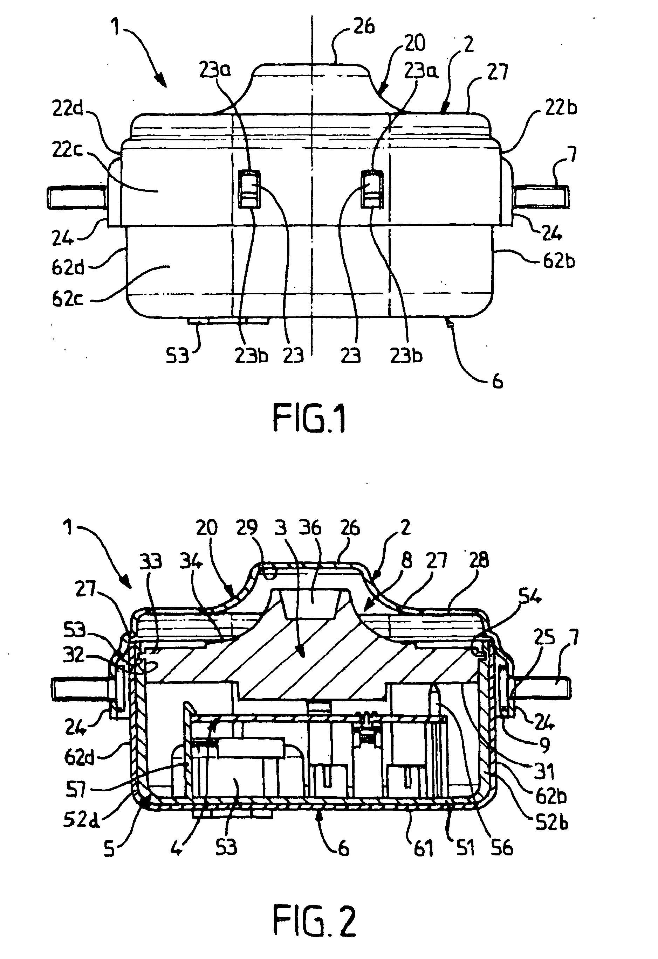

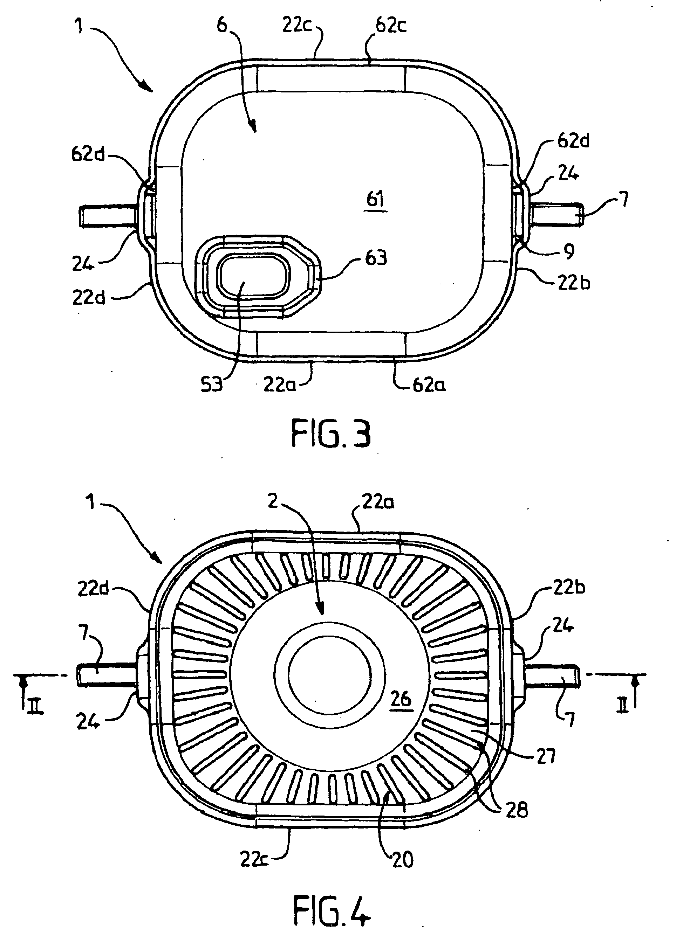

Les figures 1 à 4 représentent le mode de réalisation actuellement préféré de la sirène blindée selon l'invention. En se reportant plus particulièrement à la figure 2, la sirène blindée 1 comporte, intérieurement, un boîtier intérieur 5, de préférence, en matière plastique. Le boîtier intérieur 5 est de forme parallélépipédique et comporte une base 51 carrée aux angles arrondis, des parois latérales 52a, b, c et d et une face ouverte située à l'opposée de la base 51. La surface intérieure de la base 51 comporte un connecteur 53, des colonnettes 56 et des languettes 57 munies de bec.

A l'intérieur du boîtier 5 sont logées une carte électronique 4, telle qu'une carte de circuit imprimé munie de composants électroniques en surface, et des batteries (non représentées) connectées à la carte électronique 4 et l'alimentant en puissance électrique. La carte électronique 4 comporte des trous placés de manière à correspondre à la position des différentes colonnettes 56. La carte électronique 4 est placée sur les colonnettes 56 par déformation élastique des languettes 57 puis, une fois en position, est maintenue par les becs des languettes 57. La carte électronique 4 est reliée au connecteur 53 de manière à échanger des signaux électriques avec un système électronique de contrôle de l'état du véhicule. Plus particulièrement, la carte électronique 4 reçoit des signaux de commande de déclenchement de la sirène blindée 1. En réponse, la carte électronique 4 génère un signal électrique en direction d'un élément électromécanique de production de vibrations sonores qui sera décrit ci-dessous.

Une fois la carte électronique 4 et les batteries montées à l'intérieur du boîtier intérieur 5, celui-ci est obturé par un ensemble de production du son 3 représenté schématiquement sur la figure 2. L'ensemble de production du son 3 est constitué d'un support en plastique, d'un élément électromécanique (piézoélectrique, électromagnétique ou analogue) associé à une diaphragme, l'ensemble étant monté sur la surface intérieure 31 du support et connecté à la carte électronique 4, et un conduit 36 traversant le support, du diaphragme vibrant jusqu'à une chambre de compression 8 décrite en détails plus bas.

Des moyens de fermeture permettent de fixer l'ensemble de production du son 3 sur le boîtier intérieur 5, l'ensemble de production du son 3 servant alors de couvercle pour fermer le boîtier intérieur 5. Sur les extrémités libres des parois latérales 52a, b, c et d du boîtier interne 5, les moyens de fermeture sont constitués par un épaulement 53 formé en creux et une gorge 54. La gorge 54 est située au-dessus de l'épaulement 53 dans la partie affinée des parois latérales 52. Sur le bord périphérique 32 du support de l'ensemble de production du son 3, les moyens de fermeture sont constitués par une collerette 33 faisant saillie. Pour obturer le boîtier intérieur 5, le support de l'élément de production du son est enfoncé par déformation dans le boîtier intérieure 5 jusqu'à ce que la collerette 33 vienne en appui sur l'épaulement 53. La collerette 33 s'encliquette alors dans la gorge 54 de manière à ce que la face latérale de la collerette 33 vienne au fond de la gorge 54. Afin de rendre la liaison entre l'ensemble de production du son 3 et le boîtier intérieur 5 étanche, la sirène blindée 1 étant située de préférence sur une partie basse de la caisse du véhicule automobile susceptible de recevoir des projections d'eau ou l'analogue, un joint d'étanchéité en résine peut être avantageusement réalisé sur la partie en creux située à la périphérie de la face supérieure 34 de l'ensemble de production du son 3, et en particulier entre la collerette 33 et l'extrémité libre des parois latérales 52.

Le boîtier intérieur 5, ainsi obturé par l'ensemble de production du son 3, est placé dans une première demi-coque 6. La première demi-coque 6 est en tôle emboutie et participe au blindage de la sirène blindée 1. La forme de la demi-coque 6 s'adapte à la forme extérieure du boîtier intérieur 5. Là première demi-coque 6 comporte des premières parois latérales 62 a, b, c et d et un fond 61.

Des moyens de fixation sont prévus sur le boîtier intérieur 5 et sur la première demi-coque 6 pour fixer de manière sûre le boîtier intérieur 5 à l'intérieur de la première demi-coque 6. Dans le mode de réalisation décrit, deux parois latérales 52b et 52d parmi les parois latérales 52 du boîtier intérieur 5 comportent respectivement une paire de saillies en forme de coin (non représentées). Ces saillies sont par exemple situées extérieurement, dans la partie supérieure des parois latérales 52b et 52d. Deux parois latérales 62b et 62d parmi les parois latérales de la première demi-coque 6 comportent des ouvertures (non représentées) destinées à coopérer avec lesdites saillies. En conséquence, les ouvertures des parois latérales 62b et 62d sont en vis-à-vis des saillies des parois latérales 52b et 52d en position assemblée du boîtier intérieur 5 dans la première demi-coque 6. Lorsque le boîtier intérieur 5 est inséré dans la première demi-coque 6, aucune résistance ne s'oppose au passage de la partie basse du boîtier intérieur 5 au début de l'insertion. Puis, en jouant sur l'élasticité du plastique dont sont formées les parois latérales 52, les saillies sont forcées légèrement afin d'insérer la partie supérieure du boîtier intérieur 5 dans la première demi-coque 6. Lorsque les saillies arrivent au niveau des ouvertures portées par les parois latérales de la première demi-coque 6, elles reprennent élastiquement leur position de repos et s'encliquettent dans les ouvertures. De cette manière, le boîtier intérieur 5 est fixé dans la première demi-coque 6 de manière simple et sûre. Une fois en position à l'intérieur de la demi-coque 6, tout mouvement du boîtier intérieur 5 est empêché et le boîtier intérieur 5 ne peut être retiré de la première demi-coque 6 qu'avec difficulté.

Le fond 61 de la première demi-coque 6 comporte une découpe 63 située en vis-à-vis et s'ajustant au connecteur 53. Ainsi, le connecteur 53 est accessible depuis l'extérieur de la sirène blindée 1 pour être connecté au système électronique de contrôle au moyen d'une liaison de type prédéterminé, par ailleurs connu.

La première demi-coque 6 est fermée par une deuxième demi-coque 2 formant couvercle. La deuxième demi-coque 2 comporte des deuxièmes parois latérales 22 a, b, c et d et une paroi principale 20. La périphérie de la surface intérieure 29 de la paroi principale 20 comporte un épaulement 27. La position assemblée de la deuxième demi-coque 2 sur la première demi-coque 6 est déterminée lorsque l'extrémité libres des premières parois latérales 62 de la première demi-coque 6 viennent en appui sur l'épaulement 27. En position assemblée, les deuxièmes parois latérales 22 a, b, c et d de la deuxième demi-coque 2 recouvrent respectivement les premières parois latérales 62 a, b, c et d de la première demi-coque 6. Par exemple, la moitié de la hauteur des premières parois latérales 62 a, b, c et d est recouverte. De plus, les dimensions de la deuxième demi-coque 2 s'adaptent aux dimensions de la première demi-coque 6, de sorte que les parois latérales respectives s'adaptent quasiment sans aucun jeu résiduel entre elles. Cet assemblage permet de former une coque extérieure assurant un blindage continu des organes fragiles internes de la sirène blindée 1.

Les moyens d'assemblage de la deuxième demi-coque 2 sur la première demi-coque 6 vont maintenant être décrits en détails. Deux parois 62a et 62c parmi les premières parois latérales 62 de la première demi-coque 6, situées à l'opposée l'une de l'autre, comportent respectivement deux orifices de section rectangulaire. Ces orifices sont situés de manière à être recouverts par les deuxièmes parois latérales 22a et 22c de la deuxième demi-coque 2. Par exemple, ils sont placés aux trois quarts de la hauteur des premières parois latérales 62a et 62c.

Les deuxièmes parois latérales 22 a et c de la deuxième demi-coque 2, comportent des ergots 23 destinés à se trouver en vis-à-vis desdits orifices rectangulaires des premières parois latérales 62 a et c, en position assemblée des deux demi-coques. De manière simple, les ergots 23 sont réalisés par découpe de l'épaisseur des deuxièmes parois latérales selon trois des côtés d'une forme rectangulaire, identique à celle des orifices des premières parois latérales. Puis, les languettes obtenues sont recourbées vers l'intérieur de la deuxième demi-coque 2 de manière à former des bras coudés. Chacun des ergots 23 rectangulaires est retenu à la deuxième paroi latérale 22 par le côte 23b de la forme rectangulaire le plus éloigné de la paroi principale 20. Lors de l'assemblage de la deuxième demi-coque 2 sur la première demi-coque 6, les premières parois latérales 22 appuient sur le coude des bras coudés de manière à faire rentrer élastiquement l'ergot 23 dans l'épaisseur des deuxièmes parois latérales 22. Les premières parois latérales 62 peuvent passer les ergots 23 et être positionnés sur l'épaulement 27. Une fois que la position correcte d'assemblage des deux demi-coques est trouvée, les ergots 23 se trouvent en vis-à-vis des orifices portés par la première demi-coque 6 et reprennent élastiquement leur position initiale. Les ergots 23 font alors saillie dans les orifices de la première demi-coque 6. Par ailleurs, le côté 23a de la forme rectangulaire de chaque ergot 23, le plus proche de la paroi principale 20 de la première demi-coque 2, vient en butée contre le côté de l'orifice de la deuxième demi-coque 6 dans lequel est inséré l'ergot 23. Ainsi, les deux demi-coques 6 et 2 ne peuvent être désassemblées l'une de l'autre.

La surface intérieure 29 de la paroi principale 20 et la surface extérieure 34 de l'ensemble de production du son 3 forment une chambre de compression 8. La paroi principale 20 est emboutie de manière à présenter un dôme central 26 faisant saillie vers l'extérieur. De cette manière, la surface intérieure 29 s'adapte à la surface extérieure 34, pour réaliser une sirène blindée 1 compacte. Mais surtout, dans cette configuration, la chambre de compression 8 présente un profil optimal permettant la compression de l'air situé devant le diaphragme et l'augmentation du rendement sonore du haut-parleur que constitue la sirène blindée.

La demanderesse a, de plus, réalisé de nombreux essais pour mettre en évidence le bon fonctionnement d'une chambre de compression constituée d'une surface en métal placée en vis-à-vis d'une surface en plastique.

Pour que le son sorte de la chambre de compression 8, la paroi principale 20 est munie de nombreuses fentes 28 pratiquées dans la partie périphérique 27 de la paroi principale 20 entourant le dôme central 26. Les fentes 28 sont orientées radialement depuis le centre de la paroi principale 20. La largeur des fentes 28 est restreinte de manière à ne pas permettre l'introduction d'un outil pointu dans le but d'endommager le diaphragme.

Les moyens de fixation de la sirène blindée 1 vont maintenant être décrits. Les extrémités situées à l'opposée à la paroi principale 20 de deux parois 22b et 22d parmi les deuxièmes parois latérales 22 de la deuxième demi-coque 2 comportent respectivement une partie bombée 24 faisant saillie vers l'extérieur. Cette partie bombée 24 est réalisée par repoussement de la tôle constituant la deuxième demi-coque 2. Chaque partie bombée 24 comporte un alésage 25 traversant. En position assemblée de la deuxième demi-coque 2 sur la première demi-coque 6, un logement 9 est défini entre la partie bombée 24 de la deuxième demi-coque 2 et les premières parois latérales 22 b et d de la première demi-coque 6. Le logement 9 est destiné à recevoir la tête carrée d'une vis 7. La vis 7 a été positionnée, préalablement à l'assemblage des deux demi-coques, en insérant la tige de la vis 7 dans l'alésage 25. Une fois l'assemblage des deux demi-coques réalisé, la vis 7 ne peut être sortie du logement 9. Les vis 7 permettent de fixer de manière sûre la sirène blindée 1 sur la caisse du véhicule, au moyen d'écrous, par exemple.

## Revendications

1. Sirène blindée destinée à équiper un véhicule automobile, comportant un boîtier intérieur (5), des moyens électroniques (4) de génération d'un signal électrique logés dans ledit boîtier intérieur, un ensemble de production du son (3) connecté électriquement auxdits moyens électroniques et apte à transformer ledit signal électrique en un signal sonore, et une coque extérieure de blindage destinée à recevoir ledit boîtier intérieur et comportant des première et deuxième demi-coques (6, 2) associées par des moyens d'assemblage (23), une paroi dite principale (20) de ladite deuxième demi-coque (2) étant munie d'au moins une ouverture de libération du son (28), **caractérisée en ce que** ledit ensemble de production du son forme le couvercle dudit boîtier intérieur, des moyens de fermeture sont prévus pour fermer de manière étanche ledit ensemble de production du son sur ledit boîtier intérieur, et **en ce que** la face intérieure (29) de ladite paroi principale forme, avec la surface extérieure (34) de l'ensemble de production du son placée en vis-à-vis, une chambre de compression (8) pour produire un son.

2. Sirène selon la revendication 1, **caractérisée en ce que** la paroi principale comporte une pluralité d'ouvertures de libération du son (28) constituées par des fentes ménagées à travers ladite paroi principale (20), radialement depuis son centre.

3. Sirène selon la revendication 1 ou la revendication 2, **caractérisée en ce que** ladite paroi principale (20) de la deuxième demi-coque (2) comporte un dôme central (26) faisant saillie vers l'extérieur placé en vis-à-vis de l'ensemble de production du son (3) de manière à former une chambre de compression (8) s'adaptant au profil de l'ensemble de production du son.

4. Sirène selon l'une des revendications 1 à 3, **caractérisée en ce qu'**une paroi dudit boîtier intérieur (5) est munie d'un connecteur (53) traversant ladite paroi et relié électriquement auxdits moyens électroniques (4), et **en ce que** ladite première demi-coque (6) comporte une découpe (63) adaptée par laquelle ledit connecteur est accessible depuis l'extérieur, de manière à ce que lesdits moyens électroniques puissent échanger des signaux électriques avec des moyens électroniques extérieurs.

5. Sirène selon l'une des revendications 1 à 4, **caractérisée en ce que** ladite première demi-coque (6) comporte un fond (61) et des premières parois latérales (62a-d), **en ce que** la deuxième demi-coque (2) comporte ladite paroi principale (20) et des deuxièmes parois latérales (22a-d), et **en ce que** lesdites deuxièmes parois latérales (22a-d) recouvrent au moins partiellement lesdites premières parois latérales (62a-d) en position assemblée de la deuxième demi-coque sur la première demi-coque.

6. Sirène selon la revendication 5, **caractérisée en ce que** la périphérie de la surface intérieure (29) de la paroi principale (20) de la deuxième demi-coque (2) comporte un épaulement (27) sur lequel les extrémités libres des premières parois latérales (62a-d) de la première demi-coque (6) viennent prendre appui.

7. Sirène selon l'une des revendications 5 à 6, **caractérisée en ce que** lesdits moyens d'assemblage des première et deuxième demi-coques (6, 2) comportent une pluralité d'orifices placés sur les premières parois latérales (62a-d) et une pluralité d'ergots (23) rétractables placés sur les deuxièmes parois latérales (22a-d) faisant saillie vers l'intérieur, lesdits ergots se rétractant lorsque ladite deuxième demi-coque est placée sur ladite première demi-coque et reprenant leur position initiale une fois que les deux demi-coques sont en position assemblée, lesdits ergots de la deuxième demi-coque étant en vis-à-vis des orifices de la première demi-coque.

8. Sirène selon la revendication 7, **caractérisée en ce que** lesdits ergots (23) sont découpés dans lesdites deuxièmes parois latérales (22a-d) et forment des bras coudés d'un seul tenant avec ladite deuxième demi-coque, de manière à permettre un assemblage définitif des première et deuxième demi-coques entre elles.

9. Sirène selon l'une des revendication 5 à 8, **caractérisée en ce que** lesdites parois latérales (22a-d) de ladite deuxième demi-coque (2) comportent des portions bombées (24) faisant saillie vers l'extérieur et munies d'alésages traversant (25), pour former avec les premières parois latérales (62a-d) en vis-à-vis un logement (9) destiné à recevoir la tête d'une vis (7) dont la tige traverse ledit alésage traversant dans le but de fixer ladite sirène sur la caisse dudit véhicule.

10. Sirène selon l'une des revendication 1 à 9, **caractérisée en ce que** lesdits moyens de fermeture comportent un épaulement (53) formé en creux sur la face intérieure de l'extrémité libre des parois latérales (52) dudit boîtier intérieur (5) et une collerette (33) en saillie sur le bord périphérique (32) de l'ensemble de production du son (3), apte à prendre appui et à s'encliqueter sur ledit épaulement.

11. Sirène selon l'une des revendication 1 à 10, **caractérisée en ce que** l'ensemble de production du son (3) comporte un support, un diaphragme piézoélectrique placé sur la face intérieure dudit support et connecté auxdits moyens électroniques, apte à vibrer en réponse au signal électrique émis par lesdits moyens électroniques, et un conduit (36) profilé traversant la paroi dudit support, débouchant dans ladite chambre de compression (8) et coopérant avec ledit diaphragme pour la production du son.

12. Sirène selon l'une des revendications 1 à 11, **caractérisée en ce que** lesdits moyens électroniques comportent une carte de circuit imprimé équipée apte à générer ledit signal électrique en direction de l'ensemble de production du son et des batteries aptes à fournir une puissance électrique à ladite carte pour que la sirène soit autonome.

13. Sirène selon l'une des revendications 1 à 12, **caractérisée en ce qu'**elle comporte des moyens de fixation du boîtier intérieur (5) à la première demi-coque (6), lesdits moyens de fixation comportant une pluralité de saillies situées sur les paroi latérales (52) du boîtier intérieur et dirigées vers l'extérieur dudit boîtier intérieur, et des ouvertures destinées à coopérer avec lesdites saillies et formées sur des parois latérales (62) de la première demi-coque, de manière à ce que lesdites ouvertures et lesdites saillies soient respectivement en vis-à-vis les unes des autres en position assemblée du boîtier intérieur à l'intérieur de la première demi-coque.

## Claims

1. Armoured siren intended to be fitted to a motor vehicle, comprising an inner casing (5), electronic means (4) of generating an electric signal housed in the said inner casing, a sound production assembly (3) electrically connected to the said electronic means and capable of converting the said electric signal into a sound signal, and an outer armoured shell intended to receive the said inner casing and comprising first and second half-shells (6, 2) linked together by assembly means (23), a wall called the main wall (20) of the said second half-shell (2) being furnished with at least one sound-releasing opening (28), **characterized in that** the said sound production assembly forms the cover of the said inner casing, closure means are provided to seal closed the said sound production assembly on the said inner casing, and **in that** the inner face (29) of the said main wall forms, with the outer surface (34) of the sound production assembly placed opposite, a compression chamber (8) for producing a sound.

2. Siren according to Claim 1, **characterized in that** the main wall comprises a plurality of sound-releasing openings (28) consisting of slots made through the said main wall (20), radially from its centre.

3. Siren according to Claim 1 or Claim 2, **characterized in that** the said main wall (20) of the second half-shell (2) comprises a central, outwards protruding dome (26) placed opposite the sound production assembly (3) so as to form a compression chamber (8) adapting to the profile of the sound production assembly.

4. Siren according to one of Claims 1 to 3, **characterized in that** a wall of the said inner casing (5) is furnished with a connector (53) traversing the said wall and electrically connected to the said electronic means (4), and **in that** the said first half-shell (6) comprises an appropriate cut-out (63) through which the said connector can be accessed from the outside, so that the said electronic means can interchange electric signals with external electronic means.

5. Siren according to one of Claims 1 to 4, **characterized in that** the said first half-shell (6) comprises a bottom (61) and first side walls (62a-d), **in that** the second half-shell (2) comprises the said main wall (20) and second side walls (22a-d), and **in that** the said second side walls (22a-d) at least partially cover the said first side walls (62a-d) in the assembled position of the second half-shell on the first half-shell.

6. Siren according to Claim 5, **characterized in that** the periphery of the inner surface (29) of the main wall (20) of the second half-shell (2) comprises a shoulder (27) on which the free ends of the first side walls (62a-d) of the first half-shell (6) come to rest.

7. Siren according to one of Claims 5 and 6, **characterized in that** the said means of assembling the first and second half-shells (6, 2) comprise a plurality of orifices placed on the first side walls (62a-d) and a plurality of retractable lugs (23) placed on the second side walls (22a-d) protruding inwards, the said lugs retracting when the said second half-shell is placed on the said first half-shell and resuming their initial position once the two half-shells are in the assembled position, the said lugs of the second half-shell being opposite the orifices of the first half-shell.

8. Siren according to Claim 7, **characterized in that** the said lugs (23) are cut out in the said second side walls (22a-d) and form bent arms in a single piece with the said second half-shell, so as to allow a definitive assembly of the first and second half-shells together.

9. Siren according to one of Claims 5 to 8, **characterized in that** the said side walls (22a-d) of the said second half-shell (2) comprise domed portions (24) protruding outwards and furnished with through bores (25) to form, with the first side walls (62a-d) opposite, a housing (9) intended to receive the head of a screw (7) whose stem passes through the said through bore for the purpose of attaching the said siren onto the body of the said vehicle.

10. Siren according to one of Claims 1 to 9, **characterized in that** the said closure means comprise a shoulder (53) formed as a recess on the inner face of the free end of the side walls (52) of the said inner casing (5) and a collar (33) protruding on the peripheral edge (32) of the sound production assembly (3), capable of bearing and snap-fitting onto the said shoulder.

11. Siren according to one of Claims 1 to 10, **characterized in that** the sound production assembly (3) comprises a support, a piezoelectric diaphragm placed on the inner face of the said support and connected to the said electronic means, capable of vibrating in response to the electric signal emitted by the said electronic means, and a sectional duct (36) traversing the wall of the said support, opening into the said compression chamber (8) and interacting with the said diaphragm for the production of the sound.

12. Siren according to one of Claims 1 to 11, **characterized in that** the said electronic means comprise a fitted printed circuit board capable of generating the said electric signal in the direction of the sound production assembly and batteries capable of supplying an electric power to the said board so that the siren is stand-alone.

13. Siren according to one of Claims 1 to 12, **characterized in that** it comprises means of attaching the inner casing (5) to the first half-shell (6), the said attachment means comprising a plurality of protrusions situated on the side walls (52) of the inner casing and directed towards the outside of the said inner casing, and openings intended to interact with the said protrusions and formed on side walls (62) of the first half-shell, so that the said openings and the said protrusions are respectively opposite one another in the assembled position of the inner casing inside the first half-shell.

## Patentansprüche

1. Gepanzerte Sirene für ein Kraftfahrzeug mit einem inneren Gehäuse (5), in dem inneren Gehäuse angeordneten elektronische Mitteln (4) zur Erzeugung eines elektrischen Signals, einer Schallerzeugungseinrichtung (3), die elektrisch mit den elektronischen Mitteln verbunden ist und das elektrische Signal in ein akustisches Signal umwandeln kann, und eine äußere Panzerungsschale, welche zur Aufnahme des inneren Gehäuses dient und erste und zweite Halbschalen (6, 2) aufweist, die durch Montagemittel (23) miteinander verbunden sind, wobei eine Hauptwand (20) der zweiten Halbschale (2) mit wenigstens einer Öffnung zur Schallfreisetzung (28) versehen ist, **dadurch gekennzeichnet, dass** die Schallerzeugungseinrichtung den Deckel des inneren Gehäuses bildet, wobei Verschlussmittel vorgesehen sind, um die Schallerzeugungseinrichtung auf dem inneren Gehäuse dicht zu verschließen, und **dadurch**, dass die Innenfläche (29) der Hauptwand mit der ihr gegenüber angeordneten Außenfläche (34) der Schallerzeugungseinrichtung eine Druckkammer (8) zur Schallerzeugung bildet.

2. Sirene gemäß Anspruch 1, **dadurch gekennzeichnet, dass** die Hauptwand mehrere Öffnungen zur Schallfreisetzung (28) aufweist, die aus Schlitzen bestehen, die in der Hauptwand (20) radial von ihrem Zentrum wegführend eingespart sind.

3. Sirene gemäß Anspruch 1 oder Anspruch 2, **dadurch gekennzeichnet, dass** die Hauptwand (20) der zweiten Halbschale (2) eine nach außen ragende zentrale Kuppel (26) aufweist, die gegenüber der Schallerzeugungseinrichtung (3) derart angeordnet ist, dass eine Druckkammer (8) gebildet wird, die sich dem Profil der Schallerzeugungseinrichtung anpasst.

4. Sirene gemäß einem der Ansprüche 1 bis 3, **dadurch gekennzeichnet, dass** eine Wand des inneren Gehäuses (5) mit einem Verbindungselement (53) versehen ist, welches die Wand durchquert und elektrisch mit den elektronischen Mitteln (4) verbunden ist, und **dadurch**, dass die erste Halbschale (6) einen angepassten Ausschnitt (63) aufweist, durch den das Verbindungselement derart von außen zugänglich ist, dass die elektronischen Mittel elektrische Signale mit äußeren elektronischen Mitteln austauschen können.

5. Sirene gemäß einem der Ansprüche 1 bis 4, **dadurch gekennzeichnet, dass** die erste Halbschale (6) einen Boden (61) und erste Seitenwände (62a-d) aufweist, **dadurch**, dass die zweite Halbschale (2) die erste Hauptwand (20) und zweite Seitenwände (22a-d) aufweist, und **dadurch**, dass die zweiten Seitenwände (22a-d) im zusammengebauten Zustand der zweiten Halbschale auf der ersten Halbschale die ersten Seitenwände (62a-d) zumindest teilweise bedecken.

6. Sirene gemäß Anspruch 5, **dadurch gekennzeichnet, dass** der Rand der Innenfläche (29) der Hauptwand (20) der zweiten Halbschale (2) eine Schulter (27) aufweist, auf welcher die freien Enden der ersten Seitenwände (62a-d) der ersten Halbschale (6) in Anlage kommen.

7. Sirene gemäß einem der Ansprüche 5 bis 6, **dadurch gekennzeichnet, dass** die Montagemittel der ersten und zweiten Halbschalen (6, 2) mehrere auf den ersten Seitenwänden (62a-d) angeordnete Öffnungen und mehrere, auf den zweiten Seitenwänden (22a-d) angeordnete, nach innen vorspringende, einziehbare Zapfen (23) aufweisen, wobei sich die Zapfen einziehen, wenn die zweite Halbschale auf der ersten Halbschale angeordnet wird und ihre Ausgangsstellung dann wieder einnehmen, wenn sich die beiden Halbschalen in ihrer montierten Position befinden, in der die Zapfen der zweiten Halbschale sich gegenüber den Öffnungen der ersten Halbschale befinden.

8. Sirene gemäß Anspruch 7, **dadurch gekennzeichnet, dass** die Zapfen (23) in den zweiten Seitenwänden (22a-d) ausgeschnitten sind und mit der zweiten Halbschale einstückige, gekrümmte Arme bilden, so dass eine endgültige Montage der ersten und zweiten Halbschalen miteinander ermöglicht wird.

9. Sirene gemäß einem der Ansprüche 5 bis 8, **dadurch gekennzeichnet, dass** die Seitenwände (22a-d) der zweiten Halbschale (2) nach außen ragende gewölbte Abschnitte (24) umfassen, die mit durchgehenden Bohrungen (25) versehen sind, so dass mit den gegenüberliegenden ersten Seitenwänden (62a-d) eine Ausnehmung (9) gebildet wird, die zur Aufnahme des Kopfes einer Schraube (7) dient, deren Schaft die Bohrung durchquert, um die Sirene an dem Fahrzeuggehäuse zu befestigen.

10. Sirene gemäß einem der Ansprüche 1 bis 9, **dadurch gekennzeichnet, dass** die Verschlussmittel eine Schulter (53) in Form eines Kreuzes auf der Innenfläche des freien Endes der Seitenwände (52) des inneren Gehäuses (5) und einen vorspringenden Kragen (33) auf dem Umfangsrand (32) der Schallerzeugungseinrichtung (3) aufweisen, welcher gegen die Schulter in Anlage kommen und dort einrasten kann.

11. Sirene gemäß einem der Ansprüche 1 bis 10, **dadurch gekennzeichnet, dass** die Schallerzeugungseinrichtung (3) einen Halter, eine auf der Innenfläche des Halters angeordnete und mit den elektronischen Mitteln verbundenes piezoelektrisches Diaphragma, welches durch das von den elektronischen Mitteln ausgesandte elektrische Signal in Schwingungen versetzt werden kann, und eine profilierte Leitung (36) aufweist, welche die Wand des Halters durchquert, in die Druckkammer (8) mündet und zur Schallerzeugung mit dem Diaphragma zusammenwirkt.

12. Sirene gemäß einem der Ansprüche 1 bis 11, **dadurch gekennzeichnet, dass** die elektronischen Mittel eine mit einer gedruckten Schaltung versehene Karte zur Erzeugung des elektrischen Signals für die Schallerzeugungseinrichtung und Batterien zur Bereitstellung von elektrischer Leistung für die Karte aufweisen, damit die Sirene autonom arbeiten kann.

13. Sirene gemäß einem der Ansprüche 1 bis 12, **dadurch gekennzeichnet, dass** sie Mittel zur Befestigung des inneren Gehäuses (5) an der ersten Halbschale (6) aufweist, wobei die Befestigungsmittel mehrere auf den Seitenwänden (52) des inneren Gehäuses angeordnete und bezüglich des inneren Gehäuses nach außen gerichtete Vorsprünge und auf den Seitenwänden (62) der ersten Halbschale ausgebildete Öffnungen, die mit den Vorsprüngen zusammenwirken sollen, derart aufweist, dass die Öffnungen und die Vorsprünge im montierten Zustand des inneren Gehäuses im Inneren der ersten Halbschale einander jeweils gegenüberliegen.
